# EUROPEAN PATENT SPECIFICATION

(11) **EP 2 452 856 B1**
(45) Date of publication and mention of the grant of the patent: **24.04.2013**
(21) Application number: 10190725.1
(22) Date of filing: 10.11.2010
(51) Int. Cl.: B60R 21/36

(54) **An inflatable airbag**
Aufblasbarer Airbag
Airbag gonflable

(43) Date of publication of application: 16.05.2012
(73) Proprietor: Autoliv Development AB, 447 83 Vårgårda (SE)
(72) Inventor: Zauritz, Ralf, D-83607, Holzkirchen (DE); Pucher, Florian, D-85445, Aufkirchen (DE)
(74) Representative: Parry, Simon James

(56) References cited:
- EP-A2- 1 681 212
- DE-A1- 10 254 589
- US-A1- 2009 127 016

## Description

The present invention relates to an inflatable airbag. More particularly, the invention relates to an inflatable pedestrian airbag for a motor vehicle.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle.

Due to the relatively prolonged nature of a pedestrian impact accident, it is generally desirable to inflate such pedestrian airbags so that they remain inflated for a significant period of time after deployment. This is in contrast with a driver's airbag, for example, which is provided for inflation from within the hub of the vehicle's steering wheel to provide protection for the driver of the vehicle and which is typically configured to deflate as it is impacted by the driver's head and/or torso.

There is thus an advantage to providing a pedestrian airbag which is configured to be inflated upon the detection of a likely impact with a pedestrian, and which then remains substantially fully inflated after initial deployment in order to offer the best protection for a pedestrian. As will be appreciated, however, an airbag of this nature will make it very difficult, and indeed in many cases dangerous, for the driver of the vehicle to drive the vehicle after deployment of the airbag because, by the very nature of the airbag and its manner of deployment it will impede or block the driver's clear view through the windscreen. The present invention seeks to address this problem.

DE10254589 A1 discloses a pedestrian airbag arrangement which is configured to inflate an airbag in different configurations depending upon vehicle speed and/or crash severity.

It is therefore an object of the present invention to provide an improved pedestrian airbag for a motor vehicle.

According to the present invention, there is provided a pedestrian airbag for a motor vehicle, the airbag defining an inflatable volume for the receipt of inflating gas, and said inflatable volume comprising a first chamber and a second chamber, both of said chambers being configured for inflation by said inflating gas upon deployment of the airbag, wherein said chambers are hingedly interconnected such that said second chamber is hingedly moveable relative to said first chamber when the airbag is substantially fully inflated, and wherein the airbag is arranged for deployment, via inflation of both said chambers, into a position in which it lies substantially across or against the windscreen of the motor vehicle, and such that said second chamber inflates into a first position in which it lies across or against at least part of the windscreen, the second chamber being hingedly moveable, when inflated, between said first position and a second position in which it is substantially clear of the windscreen..

Preferably, said first and second chambers are both formed from flexible sheet material and are interconnected by a seam formed between opposing layers or sheets of said material, the seam defining a notional hinge about which said second chamber is moveable relative to the first chamber when the airbag is inflated.

Advantageously, said first and second chambers are fluidly interconnected.

Conveniently, said first and second chambers are fluidly interconnected by at least one flow passage formed across said seam.

Preferably, said second chamber is configured to receive a flow of inflating gas from said first chamber via said fluid interconnection between the chambers.

Advantageously, the first chamber is shaped so as to define a re-entrant recess when substantially fully inflated, said second chamber being arranged to substantially fill said recess when inflated in said first position.

Conveniently, said second chamber is configured so as to have a substantially fully inflated size and shape which substantially corresponds to the size and shape of said recess.

Preferably, said seam defines an edge of the recess.

Preferably, the second chamber partially obstructs the view of a driver of the vehicle through the windscreen when in said first position, and is substantially unobstructive of the driver's view through the windscreen when in said second position.

Advantageously, the airbag is provided in combination with an actuating arrangement configured to move said second chamber from said first position to said second position.

Conveniently, said actuating arrangement comprises a strap or chord attached to said second chamber at a position spaced from said hinge, the actuating arrangement being configured to pull or wind said strap or chord upon actuation, thereby pulling the second chamber from said first position to said second position about said hinge.

Preferably, said actuating arrangement is provided below a rear part of the hood or bonnet of the motor vehicle.

So that the invention may be more readily understood, and so that further features thereof may be appreciated, an embodiment of the invention will now be described by way of example with reference to the accompanying drawings in which:
Figure 1 is a plan view showing an initial stage in the production of an airbag in accordance with the present invention, illustrating two superimposed sheets of flexible material;
Figure 2 is a view corresponding generally to that of figure 1, showing the sheets connected around their peripheral edges to define an inflatable volume and with a seam interconnecting the two sheets at a position inward of their peripheral edges;
Figure 3 shows a subsequent stage in the production of the airbag, in which a pair of cuts is made through the interconnected sheets;
Figure 4 shows a subsequent stage in the production of the airbag, in which the sheets are interconnected by further seams to define a pair of inflatable chambers;
Figure 5 is a schematic illustration showing the airbag in a deployed condition in which it extends across the windscreen of a motor vehicle;
Figure 6 is a schematic cross-sectional view showing the airbag in the deployed condition of figure 5;
Figure 7 is a view corresponding generally to that of figure 5, but which shows the airbag in an alternate condition in which one of the two chambers has been moved in a pivotal manner relative to the other; and
Figure 8 is a view corresponding generally to that of figure 6, but showing the airbag in the alternate condition of figure 7.

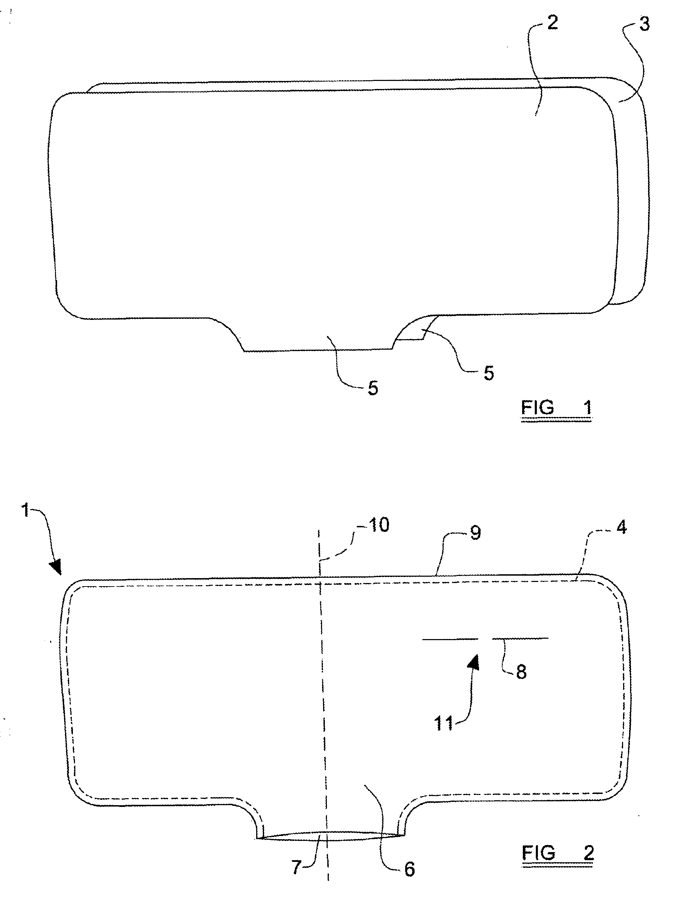

Referring initially to figure 1, there is shown a pair substantially identical sheets of flexible material from which an airbag 1 in accordance with the present invention is produced. The sheets are most preferably formed from woven fabric material and are both generally rectangular. The sheets 2, 3 are shown in figure 1 in superimposed relation to one another.

As shown in figure 2, the two sheets 2, 3 are interconnected by a peripheral seam 4 to define an inflatable volume between the sheets for the receipt of inflating gas. As will be noted, each sheet is provided with an outwardly projecting tab 5 at a generally central position along one of its long sides. The two tabs 5 are aligned when the sheets are superimposed, and the peripheral seam 4 connecting the two sheets begins at one end of the aligned tabs 5, runs around the periphery of the rectangular sheets, and terminates at the opposite end of the aligned tabs 5. The tabs 5 are thus unconnected along their length and so cooperate to form a neck 6 to the airbag, the neck defining a gas inlet aperture 7 to the airbag. The neck 6 is intended to be fitted to an inflator, such as a gas generator, in a manner known *per* se, such that upon actuation of the inflator, a large volume of inflating gas will be directed into the interior volume of the airbag 1, thereby inflating the airbag.

Although the airbag 1 has been described above as being formed from two separate sheets 2, 3 of flexible material, it is envisaged that in variants of the invention the airbag could be formed from a single sheet of flexible material, the sheet being folded in half to create two superimposed layers which can then be interconnected by a peripheral seam in an otherwise similar manner to that described above with reference to figures 1 and 2. It is also envisaged that in some embodiments the two sheets 2, 3 could be woven simultaneously via a so-called "one-piece weaving" technique known *per se* in which the warp and weft yarns forming the two layers are interwoven in selected areas to form an interconnecting seam which is integral to the woven structure of the two sheets.

As illustrated in figure 2, the two sheets 2, 3 of flexible material are also interconnected by an inner seam 8 which is formed inwardly of the peripheral edge of the airbag 1. The inner seam 8 may take any convenient form, but is preferably formed as a substantially straight line of stitching between the two sheets 2, 3. As will be appreciated, however, in the event that the airbag 1 is formed via a one-piece weaving technique of the type mentioned above, then the inner seam 8 may also be formed integrally with the weave of the sheets 2, 3 during that process.

The inner seam 8 is formed so as to lie substantially parallel to and spaced inwardly of the long edge 9 of the airbag 1 which lies opposite the edge having the neck 6. Also, it will be noted that in the arrangement illustrated, the inner seam 8 is formed off-centre in the sense that it is formed to one side of a notional transverse axis 10 of the airbag 1. As will be seen, the inner seam 8 is thus formed in one half of the airbag 1 in a transverse sense.

The inner seam 8 is created with a small discontinuity at a substantially central position along its length. The discontinuity thus defines a small gap 11 in the seam.

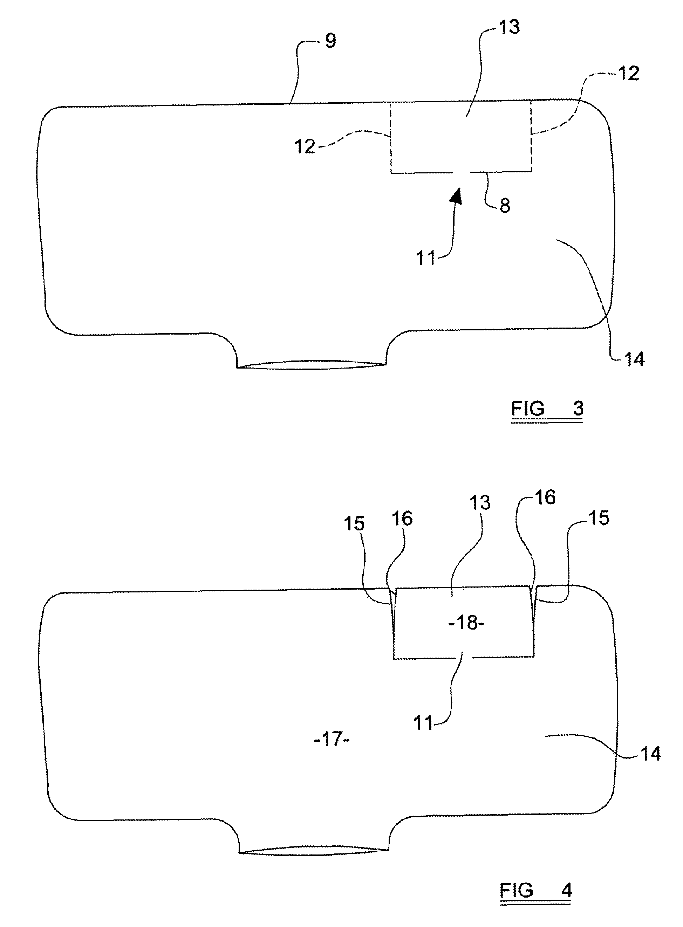

Figure 3 illustrates a subsequent stage in the production of the airbag 1, which involves the creation of a pair of cuts 12 through the flexible material. Each cut 12 is formed through the material of both superimposed layers 2, 3, and extends from a respective end of the inner seam 8 to the edge 9 of the airbag. Formation of the two cuts 12 effectively creates a pair of rectangular tabs 13, each of which is connected to the main part 14 of the airbag via the inner seam 8.

As shown in figure 4, the two layers of sheet material forming the main part 14 of the airbag are then interconnected along the short edges which were created by the cuts 12, via a pair of respective seams 15. Additionally, the two tabs 13 are also interconnected along their end edges which were created by the cuts, via a pair of respective seams 16. The seams 15, 16 may be formed in any convenient manner, but it is envisaged that they will most preferably comprise at least one line of stitching.

The resulting airbag 1 thus has a structure in which the total inflatable volume of the airbag is split into two chambers; the first being a relatively large chamber 17 defined between the main parts 14 of the sheets 2, 3 and which has a re-entrant recess defined by the seams 15 and the inner seam 8; and the second being a relatively small chamber 18 defined between the tabs 13 and bordered by the seams 16 and the inner seam 8. The small gap 11 formed by the discontinuity in the inner seam 8 defines a flow passage across the seam 8. The two chambers 17, 18 are thus fluidly interconnected via the flow passage.

In a generally conventional manner, the airbag 1 of the present invention is initially provided in a tightly packed package (not shown) under a rear part of the hood or bonnet 19 of a motor vehicle 20, at a position immediately in front of the vehicle's windscreen 21. More particularly, the airbag 1 will be fluidly connected, via its neck 6 and associated inlet aperture 7, to an inflator 22 such as a gas generator mounted beneath the rear part of the hood or bonnet 19. It is envisaged that the inflator and/or the airbag package can either be mounted to the structure of the vehicle beneath the hood or bonnet, or to hood or bonnet itself; for example to the undersurface of the hood or bonnet, or even in an upper position at the rear of the hood or bonnet. In the arrangement illustrated, the airbag and the inflator are shown mounted to the structure of the vehicle beneath the hood or bonnet.

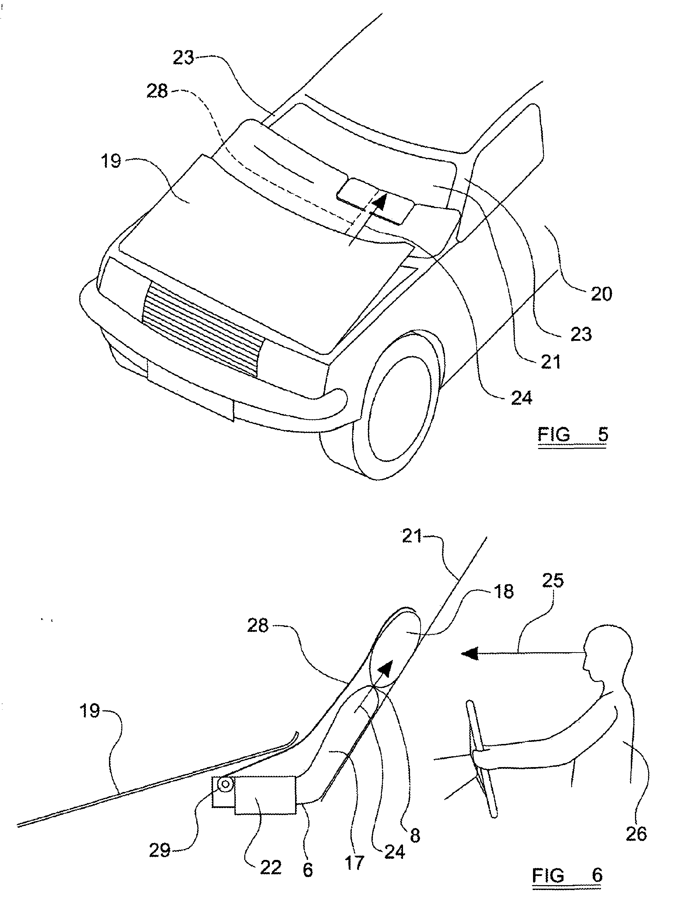

Figures 5 and 6 illustrate a motor vehicle fitted with an airbag 1 in accordance with the present invention, and show the airbag 1 in an inflated condition following actuation of the inflator 22. The rear of the hood or bonnet 19 is lifted, for example by another air-bag, a piston or other lifting arrangement, to allow sufficient space for the pedestrian airbag 1 to inflate so that it deploys in a manner effective to cover at least part of the windscreen 21 and the adjacent A-pillars 23 of the vehicle as illustrated in figures 5 and 6, thereby cushioning the impact of a pedestrian with these parts of the vehicle.

More particularly, upon actuation of the inflator 22, a large volume of inflating gas is directed into the main chamber 17 of the airbag, via the neck 6 and its associated inlet aperture 7. The main chamber 17 is thus caused to inflate rapidly, thereby causing the airbag 1 to unfold/unroll from its initial packed condition and to deploy across the windscreen 21. As the main chamber 17 inflates, a flow of inflating gas 24 passes from the first main chamber 17 into the second smaller chamber 18 via the flow passage 11. The second chamber 18 thus also inflates.

Figures 5 and 6 show both chambers 17, 18 of the airbag 1 in their substantially fully inflated condition upon deployment of the airbag. In this condition, it will be seen that the second chamber 18 is inflated so as to substantially fill the re-entrant recess defined in the first chamber 17, and adopt a position in which it lies against the windscreen. The airbag 1 thus provides protection to pedestrians across substantially the entire width of the windscreen 22 and over a significant height of the windscreen. Indeed, it will be noted in particular from figure 6 that the airbag 1 blocks the clear line of sight 25 through the windscreen of the driver 26 of the vehicle. This is necessary in order to ensure that pedestrians are sufficiently protected from injury by impact with the windscreen 22 and/or the A-pillars 23 of the vehicle.

More particularly, however, it will be noted that the second chamber 18 is positioned so as to extend across the region of the windscreen through which the driver 26 looks when driving the vehicle, the first chamber 18 being generally clear of the driver's line of sight 25. However, the previously-described structure of the airbag 1 allows it to be manipulated in order to clear the driver's line of sight 25, as will now be described.

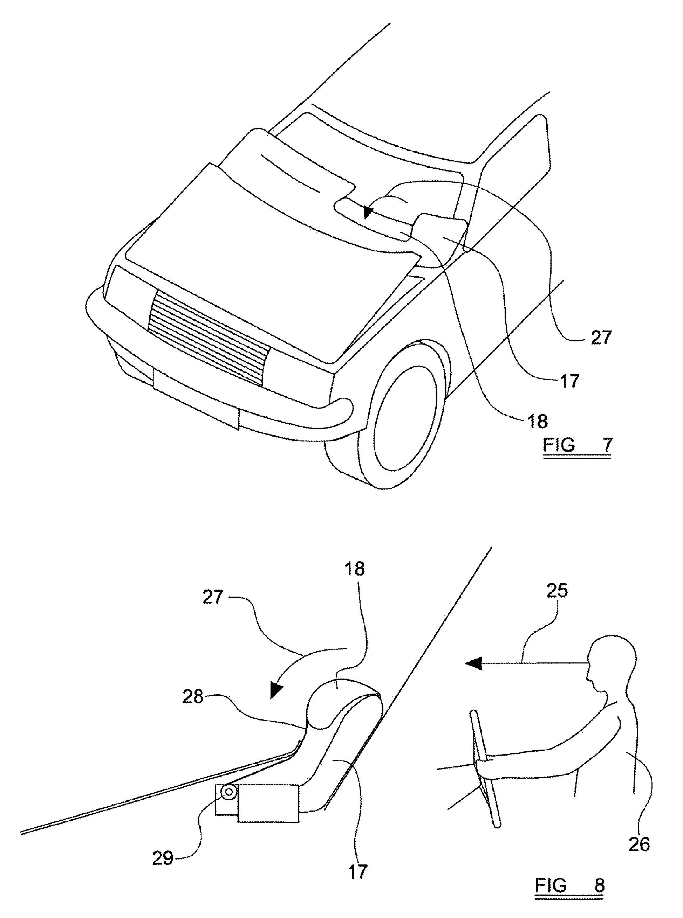

The inner seam 8 formed between the two chambers 17, 18 of the airbag serves to define an effective hinge between the two chambers 17, 18. As illustrated in figure 6, the presence of the seam 8, which interconnects the front and back sheets of the airbag, means that the inflated airbag narrows in depth in the region of the seam 8. This means that the second chamber 18 can be manipulated so as to move hingedly (i.e. generally pivotally as denoted by arrow 27) about the hinge defined by the seam 8, in the manner illustrated in figures 7 and 8, thereby moving out of the driver's line of sight 25. More particularly, figure 8 shows the second chamber 18 having been moved to a folded-down position in which it lies generally against the front surface of the main chamber 17, and is thus substantially clear of the windscreen 21, thereby permitting the driver 26 to see over the second chamber 18, and through the recess formed in the first chamber 17. Because the flow passage 11 defined by the small gap in the seam 8 is relatively small, it offers only very little resistance to this pivotal movement of the second chamber 18.

It is envisaged that the airbag 1 will be provided in combination with an actuating arrangement configured to move the second chamber 18 from its first position illustrated in figures 5 and 6 to its second position illustrated in figures 7 and 8. Figures 5 to 8 illustrate a simple configuration of such an actuating arrangement, in which a strap or chord 28 is attached to the upper edge of the second chamber 18, at a position spaced from the hinge defined by the seam 8. As illustrated most clearly in figure 6, the strap or chord 28 runs from the upper edge of the second chamber 17, beneath the rear part of the hood or bonnet 19, and is wound on a retractor spool 29. The spool 29 is configured to permit the strap or chord to pay out substantially freely from the spool as the airbag 1 is initially inflated into the position illustrated in figures 5 and 6, thereby ensuring that the strap or chord is not significantly tensioned during inflation of the airbag. However, in alternative embodiments, it is envisaged that a length of the strap or chord will initially be packed loosely for free payout as the airbag inflates. Also, it is to be appreciated that although the arrangement depicted in the figures has its actuating arrangement mounted to the structure of the vehicle, beneath the rear part of the hood or bonnet, in alternative embodiments the actuating arrangement can be mounted to the hood or bonnet itself.

Following inflation of the airbag 1 in the manner illustrated in figures 5 and 6, to provide protection to a pedestrian, the actuation arrangement can be actuated, preferably automatically, for example after the passage of a predetermined amount of time following inflation of the airbag, or in response to a signal from a sensor arrangement indicative no further risk to pedestrians. Actuation of the arrangement is effective to rotate the spool 29 in a manner effective to wind the strap or chord 28 onto the spool, thereby reducing its effective length and hence pulling the upper edge of the second chamber 18 forwardly and downwardly, thereby pulling the second chamber away from the windscreen and into its second position as illustrated in figures 7 and 8.

As will be appreciated, the airbag of the present invention is formed in a manner to ensure that it provides effective protection to a pedestrian against injury via impact with the windscreen 21 and/or A-pillars 23 of the vehicle, whilst also permitting subsequent manipulation of the airbag to pull part of the airbag clear of the driver's line of sight 25. An important advantage of the arrangement of the invention is that this manipulation of the airbag does not necessitate deflation of the airbag. The effect of the inner seam 8 in defining a localised region of relatively narrow thickness to the inflated airbag, and in defining a hinge between the two chambers 17, 18, permits the airbag to be manipulated in the manner described above even in its fully inflated condition.

It is to be appreciated that whilst the invention has been described above with reference to specific embodiments, various modifications can be made without departing from the scope of the claimed invention. For example, whilst the invention has been described with reference to an arrangement in which the second chamber 18 is relatively small and is offset to one side of the airbag 1 so as to be provided only on the driver's side of the vehicle, it is envisaged that in variants of the invention the second chamber 18 may extend across both sides of the vehicle's windscreen 21 when inflated. As will be appreciated, this sort of arrangement would permit the same airbag to be fitted either to left- or right-hand drive vehicles without modification.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A pedestrian airbag (1) for a motor vehicle (20), the airbag (1) defining an inflatable volume for the receipt of inflating gas, and said inflatable volume comprising a first chamber (17) and a second chamber (18), both of said chambers (17,18) being configured for inflation by said inflating gas upon deployment of the airbag, **characterised in that** said chambers (17, 18) are hingedly interconnected such that said second chamber (18) is hingedly moveable relative to said first chamber (17) when the airbag (1) is substantially fully inflated, and wherein the airbag (1) is arranged for deployment, via inflation of both said chambers (17, 18), into a position in which it lies substantially across or against the windscreen (21) of the motor vehicle (20), and such that said second chamber (18) inflates into a first position in which it lies across or against at least part of the windscreen (21), the second chamber (18) being hingedly moveable, when inflated, between said first position and a second position in which it is substantially clear of the windscreen (21).

2. An airbag according to claim 1, wherein said first and second chambers (17, 18) are both formed from flexible sheet material and are interconnected by a seam (8) formed between opposing layers or sheets (2, 3) of said material, the seam 8) defining a notional hinge about which said second chamber (18) is moveable relative to the first chamber (17) when the airbag is inflated.

3. An airbag according to claim 1 or claim 2, wherein said first and second chambers (17, 18) are fluidly interconnected.

4. An airbag according to claim 2, wherein said first and second chambers (17, 18) are fluidly interconnected by at least one flow passage (11) formed across said seam (8).

5. An airbag according to claim 3 or claim 4, wherein said second chamber (18) is configured to receive a flow of inflating gas (24) from said first chamber (17) via said fluid interconnection (11) between the chambers.

6. An airbag according to any preceding claim, wherein the first chamber (18) is shaped so as to define a re-entrant recess when substantially fully inflated, said second chamber (17) being arranged to substantially fill said recess when inflated in said first position.

7. An airbag according to claim 6, wherein said second chamber (18) is configured so as to have a substantially fully inflated size and shape which substantially corresponds to the size and shape of said recess.

8. An airbag according to claim 6 or claim 7, as dependant upon claim 2, wherein said seam (8) defines an edge of the recess.

9. An airbag according to any preceding claim, wherein the second chamber (18) partially obstructs the view (25) of a driver (26) of the vehicle through the windscreen (21) when in said first position, and is substantially unobstructive of the driver's view (25) through the windscreen (21) when in said second position.

10. An airbag according to any preceding claim, provided in combination with an actuating arrangement configured to move said second chamber (18) from said first position to said second position.

11. An airbag according to claim 10 as dependent upon claim 2, wherein said actuating arrangement comprises a strap or chord (28) attached to said second chamber (18) at a position spaced from said hinge (8), the actuating arrangement being configured to pull or wind said strap or chord (28) upon actuation, thereby pulling the second chamber (18) from said first position to said second position about said hinge (8).

12. An airbag according to claim 11, wherein said actuating arrangement is provided below a rear part of the hood or bonnet (19) of the motor vehicle (20).

## Patentansprüche

1. Fußgängerairbag (1) für ein Kraftfahrzeug (20), wobei der Airbag (1) ein aufblasbares Volumen zur Aufnahme von Füllgas definiert und das aufblasbare Volumen eine erste Kammer (17) und eine zweite Kammer (18) umfasst, wobei beide Kammern (17, 18) so eingerichtet sind, dass sie beim Auslösen des Airbags mit dem Füllgas aufgeblasen werden, **dadurch gekennzeichnet, dass** die Kammern (17, 18) derart gelenkig miteinander verbunden sind, dass die zweite Kammer (18) bezogen auf die erste Kammer (17) klappbar beweglich ist, wenn der Airbag (1) im Wesentlichen vollständig aufgeblasen ist, und wobei der Airbag (1) so angeordnet ist, dass er über das Aufblasen der beiden Kammern (17, 18), in eine Position entfaltet wird, in der er im Wesentlichen über oder an der Windschutzscheibe (21) des Kraftfahrzeugs (20) liegt, und so, dass sich die zweite Kammer (18) in eine erste Position füllt, in der sie über oder an zumindest einem Teil der Windschutzscheibe (21) liegt, wobei die zweite Kammer (18), wenn sie aufgeblasen ist, klappbar zwischen der ersten Position und einer zweiten Position beweglich ist, in der sie im Wesentlichen fern von der Windschutzscheibe (21) ist.

2. Airbag nach Anspruch 1, wobei die erste und zweite Kammer (17, 18) beide aus flexiblem Bahnenmaterial geformt sind und durch eine Naht (8) miteinander verbunden sind, die zwischen gegenüberliegenden Lagen oder Bahnen (2, 3) aus dem Material ausgebildet ist, wobei die Naht (8) ein gedachtes Gelenk definiert, um das herum die zweite Kammer (18) bezogen auf die erste Kammer (17) beweglich ist, wenn der Airbag aufgeblasen ist.

3. Airbag nach Anspruch 1 oder Anspruch 2, wobei die erste und zweite Kammer (17, 18) fluidmäßig miteinander verbunden sind.

4. Airbag nach Anspruch 2, wobei die erste und zweite Kammer (17, 18) über mindestens einen Strömungskanal (11), der mitten durch die Naht (8) ausgebildet ist, fluidmäßig miteinander verbunden sind.

5. Airbag nach Anspruch 3 oder Anspruch 4, wobei die zweite Kammer (18) so eingerichtet ist, dass sie einen Strom Füllgas (24) aus der ersten Kammer (17) über die Fluidverbindung (11) zwischen den Kammern aufnimmt.

6. Airbag nach einem vorhergehenden Anspruch, wobei die erste Kammer (18) so geformt ist, dass sie eine zurückspringende Vertiefung definiert, wenn sie im Wesentlichen vollständig aufgeblasen ist, wobei die zweite Kammer (17) so angeordnet ist, dass sie im Wesentlichen die Vertiefung ausfüllt, wenn sie in der ersten Position aufgeblasen ist.

7. Airbag nach Anspruch 6, wobei die zweite Kammer (18) so eingerichtet ist, dass sie eine im Wesentlichen vollständig aufgeblasene Größe und Form aufweist, die im Wesentlichen der Größe und Form der Vertiefung entspricht.

8. Airbag nach Anspruch 6 oder Anspruch 7, wenn abhängig von Anspruch 2, wobei die Naht (8) einen Rand der Vertiefung definiert.

9. Airbag nach einem vorhergehenden Anspruch, wobei die zweite Kammer (18) die Sicht (25) eines Fahrers (26) des Fahrzeugs durch die Windschutzscheibe (21) teilweise versperrt, wenn sie sich in der ersten Position befindet, und die Sicht (25) des Fahrers durch die Windschutzscheibe (21) im Wesentlichen nicht versperrt, wenn sie sich in der zweiten Position befindet.

10. Airbag nach einem vorhergehenden Anspruch, der in Verbindung mit einer Betätigungsanordnung vorgesehen ist, die so eingerichtet ist, dass sie die zweite Kammer (18) aus der ersten Position in die zweite Position bewegt.

11. Airbag nach Anspruch 10, wenn abhängig von Anspruch 2, wobei die Betätigungsanordnung einen Riemen oder Gurt (28) umfasst, der an der zweiten Kammer (18) in einer von dem Gelenk (8) beabstandeten Position befestigt ist, wobei die Betätigungsanordnung so eingerichtet ist, dass sie bei Betätigung den Riemen oder Gurt (28) zieht oder aufwickelt, wodurch die zweite Kammer (18) aus der ersten Position in die zweite Position um das Gelenk (8) herum gezogen wird.

12. Airbag nach Anspruch 11, wobei die Betätigungsanordnung unter einem hinteren Teil der Motorhaube (19) des Kraftfahrzeugs (20) angeordnet ist.

## Revendications

1. Airbag piéton (1) pour un véhicule à moteur (20), l'airbag (1) définissant un volume gonflable pour la réception de gaz de gonflage, et ledit volume gonflable comprenant une première chambre (17) et une seconde chambre (18), les deux dites chambres (17, 18) étant configurées pour le gonflage par ledit gaz de gonflage lors du déploiement de l'airbag, **caractérisé en ce que** lesdites chambres (17, 18) sont interconnectées de manière articulée de sorte que ladite seconde chambre (18) est mobile de manière articulée par rapport à ladite première chambre (17) quand l'airbag (1) est essentiellement complètement gonflé, et dans lequel l'airbag (1) est disposé pour le déploiement, via le gonflage des deux dites chambres (17, 18), dans une position dans laquelle il est étendu essentiellement en travers du ou contre le pare-brise (21) du véhicule à moteur (20), et de sorte que ladite seconde chambre (18) gonfle dans une première position dans laquelle elle est étendue en travers de ou contre au moins une partie du pare-brise (21), la seconde chambre (18) étant mobile de manière articulée, quand elle est gonflée, entre ladite première position et une seconde position dans laquelle elle est essentiellement dégagée du pare-brise (21).

2. Airbag selon la revendication 1, dans lequel lesdites première et seconde chambres (17, 18) sont toutes deux formées à partir d'un matériau en feuille souple et sont interconnectées par une couture (8) formée entre des couches ou feuilles (2, 3) opposées dudit matériau, la couture (8) définissant une articulation imaginaire autour de laquelle ladite seconde chambre (18) est mobile par rapport à la première chambre (17) quand l'airbag est gonflé.

3. Airbag selon la revendication 1 ou la revendication 2, dans lequel lesdites première et seconde chambres (17, 18) sont en interconnexion fluidique.

4. Airbag selon la revendication 2, dans lequel lesdites première et seconde chambres (17, 18) sont en interconnexion fluidique par au moins un passage d'écoulement (11) formé à travers ladite couture (8).

5. Airbag selon la revendication 3 ou la revendication 4, dans lequel ladite seconde chambre (18) est configurée pour recevoir un écoulement de gaz de gonflage (24) de ladite première chambre (17) via ladite interconnexion fluidique (11) entre les chambres.

6. Airbag selon une quelconque revendication précédente, dans lequel la première chambre (18) est formée de manière à définir un évidement rentrant quand elle est essentiellement complètement gonflée, ladite seconde chambre (17) étant disposée pour remplir essentiellement ledit évidement quand elle est gonflée dans ladite première position.

7. Airbag selon la revendication 6, dans lequel ladite seconde chambre (18) est configurée de manière à présenter une taille et une forme essentiellement complètement gonflées qui correspondent essentiellement à la taille et la forme dudit évidement.

8. Airbag selon la revendication 6 ou la revendication 7, quand elle dépend de la revendication 2, dans lequel ladite couture (8) définit un bord de l'évidement.

9. Airbag selon une quelconque revendication précédente, dans lequel la seconde chambre (18) obstrue partiellement la vue (25) d'un conducteur (26) du véhicule à travers le pare-brise (21) quand elle est dans ladite première position, et essentiellement n'obstrue pas la vue (25) du conducteur à travers le pare-brise (21) quand elle est dans ladite seconde position.

10. Airbag selon une quelconque revendication précédente, prévu en combinaison avec un ensemble d'actionnement configuré pour déplacer ladite seconde chambre (18) de ladite première position à ladite seconde position.

11. Airbag selon la revendication 10, quand elle dépend de la revendication 2, dans lequel ledit ensemble d'actionnement comprend une bande ou sangle (28) reliée à ladite seconde chambre (18) à une position espacée de ladite articulation (8), l'ensemble d'actionnement étant configuré pour tirer ou enrouler ladite bande ou sangle (28) lors de l'actionnement, tirant ainsi la seconde chambre (18) de ladite première position à ladite seconde position autour de ladite articulation (8).

12. Airbag selon la revendication 11, dans lequel ledit ensemble d'actionnement est prévu sous une partie arrière du capot (19) du véhicule à moteur (20).
